# EUROPEAN PATENT APPLICATION

(11) **EP 1 445 691 A1**
(43) Date of publication of application: **11.08.2004**
(21) Application number: 01981071.2
(22) Date of filing: 12.11.2001
(51) Int. Cl.: G06F 9/06, G06F 9/445, G06F 13/00

(54) **TERMINAL APPARATUS&COMMA; SERVER&COMMA; COMPUTER&MINUS;EXECUTED INFORMATION PROCESSING METHOD&COMMA; PROGRAM AND MEDIUM**

(71) Applicant: FUJITSU LIMITED, Kawasaki-shi, Kanagawa 211-8588 (JP)
(72) Inventor: TANIGUCHI, Shigeki, C/O FUJITSU LIMITED, Kawasaki-shi, Kanagawa 211-8588 (JP); YAMAMOTO, Mitsuhiko, C/O FUJITSU LIMITED, Kawasaki-shi, Kanagawa 211-8588 (JP); KIKUCHI, Misao, C/O FUJITSU LIMITED, Kawasaki-shi, Kanagawa 211-8588 (JP)
(74) Representative: Stebbing, Timothy Charles
(86) International application number: PCT/JP2001/009868
(87) International publication number: WO 2003/042818

(57) **Abstract**

A terminal apparatus comprising a communication unit for communicating with a server apparatus; a processing unit for executing a program received from the server apparatus via the communication unit; and a control unit for controlling the communication and processing units; When the processing unit completes an execution of a first program; the control unit acquires a destination in which to store the result of that execution; receives; from the server apparatus via the communication unit; a second program for further processing the execution result; and then causes the processing unit to execute the second program.

## Description

### TECHNICAL FIELD

The present invention relates to a communication apparatus, such as a portable phone or a terminal apparatus, and an information system comprising the communication apparatus and a server.

### BACKGROUND ART

Today, portable terminals such as portable phones have rapidly become widespread and are being used in various places such as homes and companies. In addition to being used for simply making phone calls, such portable terminals are being used for various purposes such as uploading data to websites, browsing websites and sending e-mail.

In particular, functions that handle images, such as sending an image shot with a camera disposed in a portable terminal to another portable terminal or website, are being widely used.

Also, even in cases where phone calls are placed with a portable terminal, numerous kinds of functions, such as a phone number searching function and a phone calling function using a transmission history, are being provided.

### DISCLOSURE OF THE INVENTION

Conventionally, the uses of image data in a portable terminal have been limited to, for example, mainly the following.
(A) Sending shot images to the outside using means such as mail attachments.
(B) Cutting out portions of shot images to use for standby images.

Thus, installing an image processing/finishing application program in portable phones has been rare. The main reason for this is because, even if such an application program is installed in a portable terminal, the program has been unable to execute applications that conduct complicated processing and plural processing due to limitations on the resources of the portable terminal.

There have also been cases where a conventional portable terminal has been used to download an application program that processes user information, such as program that searches and displays phonebook data, from a download site made public on a network.

In such a case, the internal specification of the downloaded program is unclear to the user. Thus, there has been no guarantee that the program acquired from the download site will not transfer data (e.g., searched phonebook data) to a third party on the network. That is, there have been no means to ensure security in the portable terminal of the user in a case where a program circulating on a network is used.

The present invention was made in light of this problem in the conventional art. It is an object of the invention to provide technology that safely executes various application programs in a portable terminal whose resources are limited.

That is, the present invention provides technology that can ensure security and execute data processing such as image handling/finishing in a portable terminal whose resources are limited. Thus, the invention protects the privacy of the user.

More specific objects of the invention are indicated below.
(1) To make it possible for a user to download, from outside a portable phone, applications for handling/finishing image data and to execute large-scale and flexible processing.
(2) To provide a mechanism that does not directly exchange data itself when handling data, but transfers data using tags having data types, headings and handling information.

With respect to (1), large-scale and flexible functions can be realized by downloading a Java application to impart, to the inside of a portable terminal, an environment to be activated, and successively downloading, from an external application server, an application that is divided into plural modules and stored and executing that application.

With respect to (2), identifiable tag information is prepared according to type, heading and handling, in all data included in the portable terminal. The tag information is exchanged between a portable phone and the applications described in (1), and when the data is handled, it is implemented indirectly without using the contents (entity) of the data. Whereby the contents of the data is prevented from being referred to in the application and privacy data (e.g., phone book, address book, contents of e-mails) are protected from malicious applications.

Means that the present invention adopts will be described below. That is, the present invention is a terminal apparatus comprising:
a communication unit that communicates with a server apparatus;
a processing unit that executes a program received from the server apparatus via the communication unit; and
a control unit that controls the communication unit and the processing unit, wherein
when the processing unit completes execution of a first program, the control unit acquires a destination in which to store the result of that execution, receives, from the server apparatus via the communication unit, a second program that further processes the execution result, and then causes the processing unit to execute the second program.

The second program is applicable to the processing result of the first program. For example, these are division, synthesis, color adjustment, contrast adjustment, smoothing and contour emphasis with respect to images. By successively receiving and executing plural programs from the server apparatus in this manner, complex and large-scale processing can be executed even in a terminal apparatus whose resources are few.

Preferably, the terminal apparatus is carried by a user.

Preferably, the terminal apparatus further comprises a shooting unit that shoots images and an image storage unit that stores the shot images.

Preferably, the terminal apparatus further comprises a registration portion that registers data in a web server via the communication unit,
wherein the processing unit executes processing with respect to that data. Thus, the data processed by the program can be registered in a web server.

Preferably, the terminal apparatus further comprises a shooting unit that shoots images. Thus, image data shot by the shooting unit can be processed by the program.

Preferably, the format of the image data includes at least one of GIF format, JPEG format and PNG format.

Preferably, at least one of text data and incoming melody data that gives notification, by music, of incoming data when data is received in the communication unit is included in the data.

Preferably, audio data is further included in the data.

Preferably, the format of the audio-data includes at least one of Wav format, PCM format, ADPCM format and AIFF format.

Preferably, the terminal apparatus further comprises an instruction information generation unit that generates instruction information representing the location of the data registered in the web server.

Preferably, the terminal apparatus further comprises an e-mail processing unit that creates an e-mail including instruction information representing the location of the data registered in the web server and requests transmission of e-mail from an e-mail server via the communication unit.

Preferably, image data is included in the data and the processing unit executes processing with respect to that image.

The present invention is also a server that receives a request to save data from a terminal apparatus, the server comprising:
a communication unit that communicates with the terminal apparatus;
a storage unit that stores data received via the communication unit; and
an instruction information generation unit that generates instruction information representing a destination in which to store the data.

Preferably, the server further comprises a data addition unit that adds, with respect to the data, at least one of text data, audio data and incoming melody data that gives notification, by music, of incoming data when the data is received.

Preferably, the server further comprises a processing unit that executes processing, when the data is image data, with respect to that image data.

The present invention is also an e-mail server that receives an e-mail transmission request from a terminal apparatus, the e-mail server comprising:
a transmission request receiving unit that receives a transmission request including an e-mail text body from a terminal apparatus;
a storage request unit which, when data has been attached to the e-mail text body, requests a server on a network to store that data and acquires instruction information representing a destination in which to store the data stored in the server; and
a transmission unit that adds the instruction information to the e-mail text body and transmits an e-mail.

The present invention is also a terminal apparatus comprising:
a communication unit that communicates with a server apparatus;
a processing unit that executes a program received from the server apparatus via the communication unit; and
a data management unit that provides data in accordance with a request from the program executed by the processing unit, wherein
the request includes information specifying the data and information designating a destination to which to output the data, and
the data management unit retains the data in a first format, converts the data to a second format and outputs the data to the output destination.

Preferably, the first data includes character data and the second data includes data where the characters have,been converted to an image.

The first format is the original format of the data, such as character information. The second format is a format where recovery of the original data is difficult, such as an image. By converting the data to the second format and outputting the data to the output destination in this manner, the danger of data of the first format circulating to the outside of the terminal from the program can be reduced.

Preferably, the information specifying the data includes information identifying the type of data and information identifying a position in plural headings or a rank in plural headings configuring one type of identified information.

In this manner, data can be indirectly designated by the type of data and the heading position or the heading rank configuring one type of information, without clearing indicating the body of the data.

The present invention is also a terminal apparatus comprising:
a communication unit that communicates with a server apparatus;
a processing unit that executes a program received from the server apparatus via the communication unit;
a function providing unit that provides a predetermined function in accordance with a request from the program executed by the processing unit; and
a data management unit that provides data to the function providing unit, wherein
the request includes information specifying the data and information instruction the function relating to that data,
the program indirectly specifies the data in the request, and
the data management unit delivers the indirectly specified data to the function providing unit or the processing unit.

Here, the program is, for example, a phone call program received from a server outside of the terminal, the function providing unit is a phone call function prepared in a portable terminal, and the data is the phone number.

In this manner, in the request from the program, data such as a phone number is indirectly designated and delivered to the function providing unit. The data management unit delivers the body (phone number) of the indirectly specified data to the function providing unit. Thus, the body (the phone number) of the data is not specified in the information at the time of execution of the program, e.g. , in a log at the time of execution or an execution history.

Preferably, the data management unit manages image data and delivers image data indirectly specified by the request to the program executed by the processing unit.

Any of the above-described constituent elements of the present invention may also be realized as a computer program. The present invention may also be a method that causes a computer to execute any of the above-described processing. The present invention may also be a program that causes a computer to realize any of the above functions. The present invention may also be a computer-readable recording medium in which the program is recorded.

### BRIEF DESCRIPTION OF THE DRAWINGS

FIG. 1 is a system configuration diagram of an information system pertaining to a first embodiment of the invention;
FIG. 2 is a hardware configuration diagram of a portable terminal 1 shown in FIG. 1;
FIG. 3 is a data configuration diagram of data downloaded to the portable terminal 1 from an application server 11 of FIG. 1;
FIG. 4 is a flow chart showing data uploading processing that uploads data to a web browser 12 with respect to the portable terminal 1;
FIG. 5 is a flow chart showing the details of data finishing processing (S4) shown in FIG. 4;
FIG. 6 is a flow chart showing downloading processing of the application server 11 shown in FIG. 1;
FIG. 7 is a flow chart showing uploading processing of the web server 12 shown in FIG. 1;
FIG. 8 is a flow chart showing the details of web server option processing (S114) shown in FIG. 7;
FIG. 9 is a flow chart showing e-mail transmission request processing that requests transmission of a transmitted-mail server 14 with respect to the portable terminal 1;
FIG. 10 is a flow chart showing transmission processing of the transmitted-mail server 14 shown in FIG. 1;
FIG. 11 is a flow chart showing the details of transmitted-mail server option processing (S123) shown in FIG. 10;
FIG. 12 is a flow chart showing uploading processing of the web server 12 pertaining to a modified example of the first embodiment;
FIG. 13 is a flow chart showing transmission processing of the transmitted-mail server 14 pertaining to the modified example of the first embodiment;
FIG. 14 is an system configuration diagram of an information system pertaining to the modified example of the first embodiment;
FIG. 15 is a data configuration diagram of data that is downloaded to the portable terminal 1 from a data server 15 shown in FIG. 14;
FIG. 16 is a flow chart showing an example of data processing executed by the portable terminal 1 shown in FIG. 14;
FIG. 17 is a conceptual diagram of an information system pertaining to a second embodiment of the invention;
FIG. 18 is an example of a phonebook screen that a phonebook display program shown in FIG. 17 displays on the portable terminal 1;
FIG. 19 is an example of tag information describing an interface between an external program 20 and an internal program 21 shown in FIG. 17;
FIG. 20 is a flow chart showing processing of the phonebook display program; and
FIG. 21 is a flow chart showing processing of a phone call program executed by the portable terminal 1.

### BEST MODES FOR IMPLEMENTING THE INVENTION

Preferable embodiments of the invention will be described below with reference to the drawings.

### (First Embodiment)

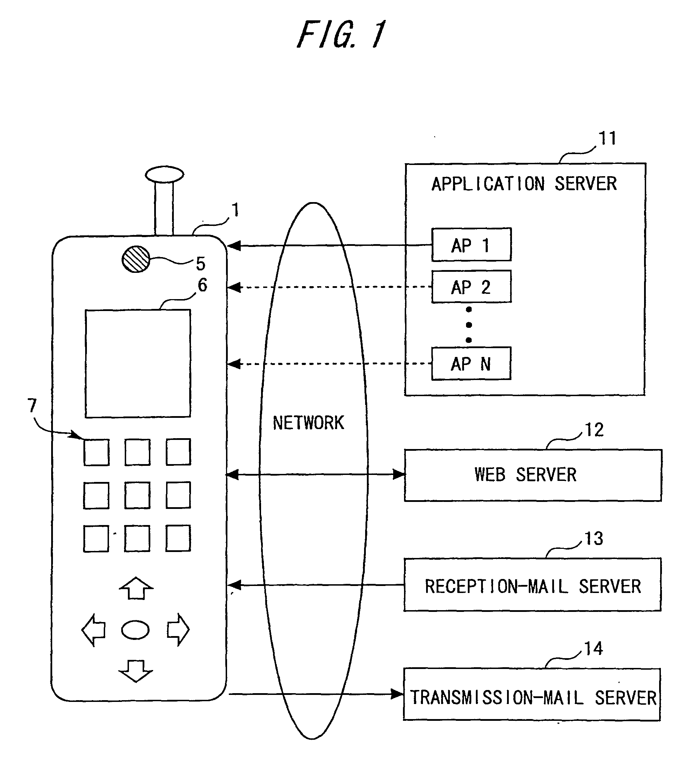

An information system pertaining to a first embodiment of the invention will be described below on the basis of FIG. 1 to FIG. 16.

### <System Configuration>

A system configuration diagram of the information system is shown in FIG. 1. The information system is configured by an application server 11, a web server 12, a received-mail server 13 and a transmitted-mail server 14 on a network, and by a portable terminal 1 that accesses these servers via the network.

The application server 11, the web server 12, the received-mail server 13 and the transmitted-mail server 14 are common computers disposed with a modem that accesses the network. The portable terminal 1 is a portable telephone, a PHS (Personal Handyphone System) or a portable information terminal (PDA, Personal Digital (Data) Assistants).

The application server 11 retains various application programs (represented as AP1 and AP2 in FIG. 1). When there is a request from the portable terminal 1, the application server 11 downloads the requested application program to the portable terminal 1.

The web server 12 communicates with the portable terminal 1, which is a client, in accordance with HTTP (HyperText Transfer Protocol). The web server 12 sends a webpage in response to a request for that webpage from the portable terminal 1.

Also, the web server 12 receives HTML (HyperText Markup Language) data describing the webpage with respect to a webpage upload request from the portable terminal 1, and saves the data in a predetermined storage region.

In the present embodiment, the portable terminal 1 generates a URL representing the destination to which the uploaded data is to be saved. The web server 12 receives the data to be uploaded and the URL (Uniform Resource Locator) thereof. Then, the web server 12 saves the uploaded data in a file designated by the URL.

The received-mail server 13 delivers, to the portable terminal 1, e-mail received through the network.

The transmitted-mail server 14 transmits, to a designated transmission destination, e-mail requested by the portable terminal 1 to be sent. In the information system of the present embodiment, in a case where image data is attached to an e-mail, the URL representing the saved destination of the image data is attached rather than the image data itself being attached to the e-mail. Because the configuration of the hardware of the respective servers is widely known, description thereof will be omitted.

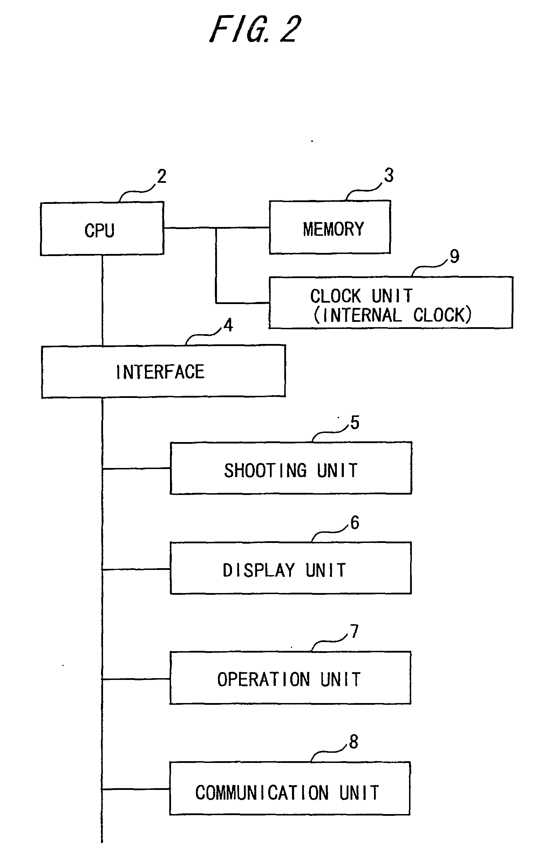

A diagram of the configuration of the hardware of the portable terminal 1 is shown in FIG. 2. As shown in FIG. 2, the portable terminal 1 includes a CPU 2, a memory 3, a clock unit 9, and a shooting unit 5, a display unit 6, an operation unit 7 and a communication unit 8 that are connected to the CPU 2 via an interface 4.

The CPU 2 executes programs loaded in the memory 3 to provide the functions of the portable terminal 1. The memory 3 stores programs executed by the CPU 2 and data processed by the CPU 2. The memory 3 includes a volatile memory such as a DRAM and a nonvolatile memory such as a flash memory. The clock unit 9 generates an internal clock that the CPU 2 operates. Also, the clock unit 9 provides the function of an internal clock with respect to application programs due to the action of a system program executed by the CPU 2.

Namely, the system program calculates the current year, month, day and time from elapsed time counted by the clock unit 9 and a predetermined reference time. The application programs executed by the CPU 2 can make an inquiry to the system program about the current year, month, day and time.

The interface 4 interchanges a signal of an internal bus of the CPU and a signal of an I/O bus connected to peripheral devices. The shooting unit 5, the display unit 6, the operation unit 7 and the communication unit 8 are connected to the interface 4 by the I/O bus.

The shooting unit 5 is, for example, a MOS camera or a CCD camera. The shooting unit 5 converts, to an electronic signal, an optical signal inputted to an imaging element and generates image data. The generated image data is stored in the memory 3 via the interface 4.

As the format of the image data stored in the memory 3, the GIF (Graphics Interchange Format) , the JPEG (Joint Photographic Coding Experts Group) format or the PNG (Portable Network Graphics) format may be used. Because these formats are widely known, description thereof will be omitted.

The display unit 6 displays information that the user of the portable terminal 1 inputs, menus, objects such as icons, images that the shooting unit 5 has shot, e-mail documents sent from another terminal or a server, and webpages that the web server 12 sends. A liquid crystal display or an EL (electroluminescence) display is used as the display unit 6.

The operation unit 7 is used for inputting information and operating the portable terminal 1. The operation unit 7 is a keyboard, a pointing device and a push-button dial. The pointing device is used to operate menus and icons displayed on the display unit 6. Arrow keys, a track ball, a joystick, an electrostatic touch pad or a stick-like pointing device is used as the pointing device.

Due to a command of the CPU 2, the communication unit 8 accesses the network and communicates with servers and other portable terminals on the network. The communication unit 8 includes an antenna and a high-frequency (RF) circuit.

As shown in FIG. 1, the portable terminal 1 downloads the application programs AP1 and AP2 for processing the image data from the application server 11. The portable terminal 1 also finishes the shot image data by executing the downloaded application program AP1.

Here, by finishing the image data is meant division of the image data, synthesis of two or more pieces of image data, embedding of character information in the image data, and various types of effects processing. Also, included in the effects processing are, for example, smoothing of the image data, contour emphasis, adjustment of color, adjustment of brightness, and adjustment of contrast.

The portable terminal 1 uploads, to the web server 12, images generated and images finished in this manner. The portable terminal 1 also attaches, to e-mail, images generated and images finished in this manner.

The portable terminal 1 uses the following as means to attach images to e-mail and deliver the images to a server or terminal of a transmission destination.
(Method 1) Attach an image data file directly to an e-mail.
(Method 2) Upload image data to the predetermined web server 12 and attach, to an e-mail, a URL representing the destination to which the image data is to be uploaded.

The portable terminal 1 uses these methods according to the setting of the user. However, in the present embodiment, an example of processing resulting from the sequence of method 1 will mainly be described.

### <Data Configuration>

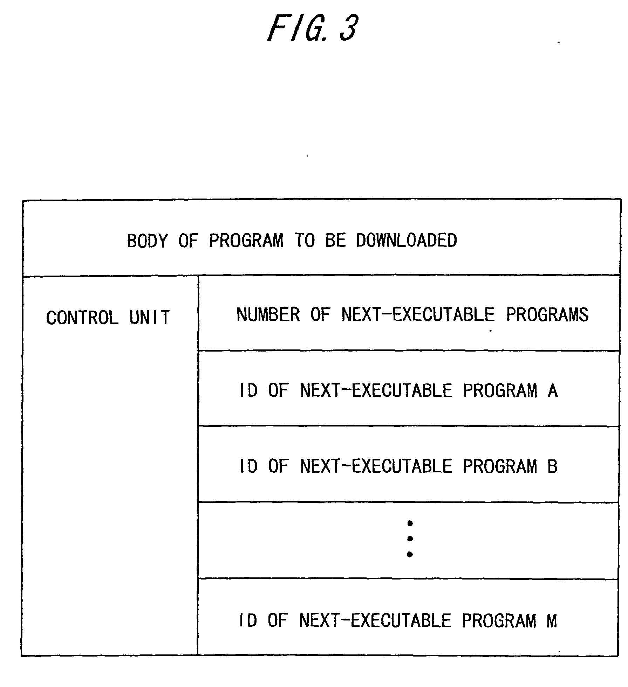

A data configuration diagram of data downloaded to the portable terminal 1 from the application server 11 is shown in FIG. 3. As shown in FIG. 3, the data includes the bodies of programs to be downloaded and a control portion.

The bodies of the programs are the application programs (AP1, etc. shown in FIG. 1) that are managed by the application server 11 and downloaded to the portable terminal 1. Included in these application programs are programs that execute image finishing and effects processing with respect to the images.

The number of application programs that can be executed after the program downloaded by the data and IDs that identify the application programs are listed in the control portion.

The IDs are symbols that identify the application programs inside the portable terminal 1 and inside the application server 11. The IDs are, for example, URLs of files in which the application programs are stored.

In a case where plural executable programs are listed in the control portion after the portable terminal 1 has executed one application program, the portable terminal 1 displays these program options on the display unit 6 and prompts the user to make a selection. When the user selects one of these options, the portable terminal 1 requests the application server 11 to download the selected program and executes the downloaded program.

In a case where one executable program has been designated after the portable terminal 1 has executed one application program, the portable terminal 1 requests the application server 11 to download the program designated in the control portion and executes the downloaded the program.

The portable terminal 1 of the present embodiment successively downloads the executable application programs from the web server 11 in this sequence and consecutively executes the application programs. For example, the portable terminal 1 executes the following processing (also called image finishing) with respect to images shot with the shooting unit 5.
(1) Removal of image noise
(2) Cutting-out of a predetermined range of an image
(3) Synthesis of an image and an image
(4) Adjustment of color
(5) Adjustment of contrast
(6) Emphasis of contour portions
(7) Insert predetermined character rows such as dates and titles.
(8) Compression of data
Moreover, the portable terminal 1 uploads, to the web server 12, images subjected to processing such as the above as webpages. Also, the portable terminal 1 attaches these images to e-mail and sends them to a transmission destination.

### <Action>

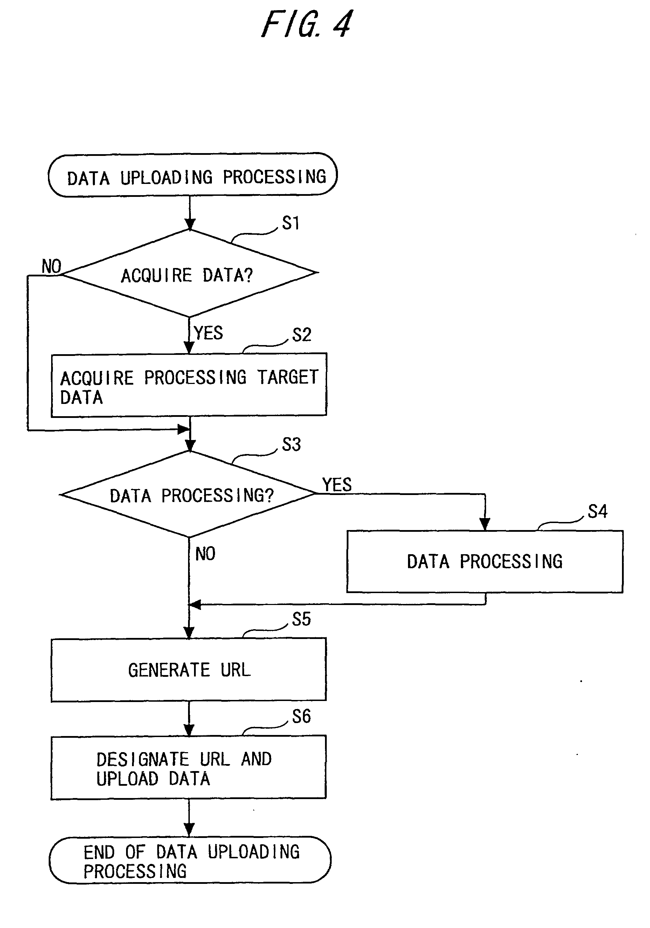

Processing of the programs executed in each constituent element of the information system will be described below using FIG. 4 to FIG. 11.

### [Data Processing with Respect to a Webpage]

A flow chart of data uploading processing that the CPU 2 of the portable terminal 1 executes is shown in FIG. 4. The CPU 2 starts the processing shown in FIG. 4 in response to an operation of the user with respect to the operation unit 7.

In the data uploading processing, the CPU 2 first determines whether or not to acquire, from the outside, data to be uploaded (S1). A case where data is to be acquired from the outside means a case where image data is to be generated by the shooting unit 5, a case where data that the user has inputted from the operation unit 7 is to be used, or a case where data is to be downloaded from the web server 12.

A case where data is not to be acquired from the outside means a case where data that is already recorded in the portable terminal 1 is to be used. The CPU 2 detects the operation of the user with respect to the operation unit 7 to determine whether or not data is to be acquired from the outside.

In a case where data is to be acquired from the outside, the CPU 2 acquires processing target data in accordance with the user operation (S2). For example, the CPU 2 uses the shooting unit 5 to generate image data. In a case where data is not to be acquired from the outside, the CPU 2 advances control to S3.

Next, the CPU 2 detects the user operation and determines whether or not to finish the data (S3). In a case where the data is to be finished, the CPU 2 executes data finishing processing (S4). In a case where the data is not to be finished, the CPU 2 advances control to S5.

Next, the CPU 2 generates a URL (S5). This URL is a URL that designates the data file of the destination to which the data is to be uploaded. This URL is generated by combining character rows, which represent the terminal ID of the portable terminal 1 and the current year, month, day and time, with the URL of the web server to be uploaded.

For example, in a case where the URL of the web server is http://provider.net, the terminal ID of the portable terminal is ABC010001 and the current year, month, day and time are 13 December 0000, 4:56:01, the URL is generated as http://provider.net/ABC010001/0000-12-23-04-56-0 1.

Here, the current year, month, day and time can be obtained from the internal clock (the clock unit 9 shown in FIG. 2) by making an inquiry to the system program.

Also, the portable terminal ID is a symbol uniquely allocated to each portable terminal 1 per portable phone company. However, a phone number allocated to the portable terminal 1 may also be used in place of using a portable terminal ID. The terminal ID or the phone number is stored in the nonvolatile memory configuring the memory 3.

Next, the CPU 2 designates this URL and uploads the data to the web server 12 (S6).

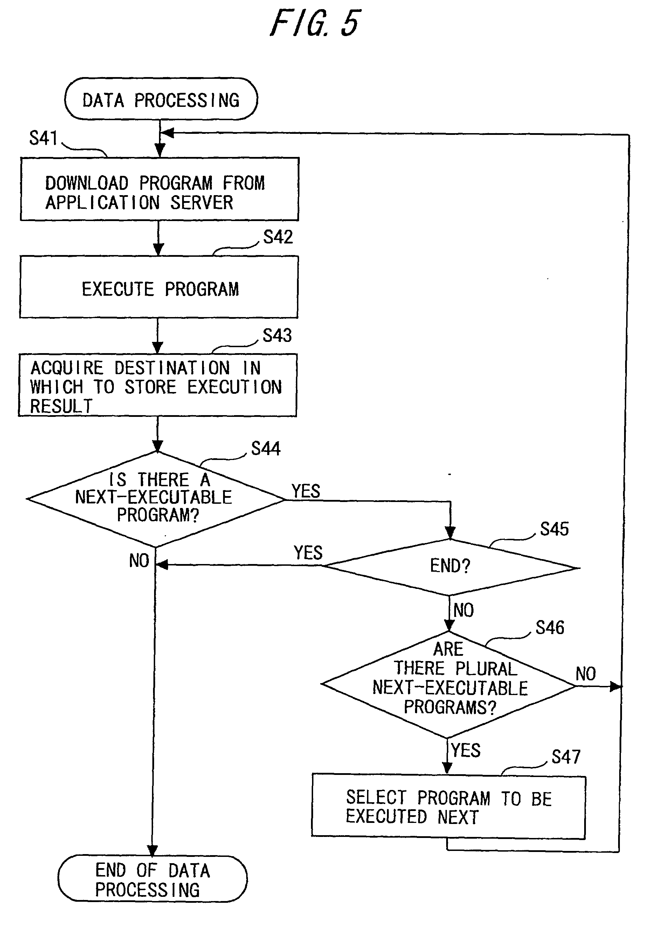

The details of the data finishing processing (S4 of FIG. 4) are shown in FIG. 5. In this processing, the CPU 2 first downloads programs from the application server 11 (S41).

Next, the CPU 2 executes those programs (S42). Thus, for example, adjustment of the color of the image, adjustment of the contrast and smoothing are executed with respect to the image, and the image is saved to a predetermined region.

Next, the CPU 2 acquires the saved destination of the execution results from the executed program (S43). Next, the CPU 2 determines whether or not a next-executable program exists (S44). As shown in FIG. 3, this is a determination of whether or not the ID of a next-executable program is set in the control portion of the downloaded data.

In a case where there is a next-executable program, the CPU 2 determines whether or not the user has given an instruction to end the data finishing processing (S45). In a case where the data finishing processing is not to end, the CPU 2 determines whether or not there are plural executable programs (S46). In a case where there are plural executable programs, the CPU 2 displays the program options on the display unit 6. Then, the CPU 2 prompts the user to select a program (S47). Then, the CPU 2 returns control to S41.

Also, in a case where there is only one executable program in the determination of S46, the CPU 2 returns control to S41 and downloads that program. In a case where there is no executable program in the determination of S44, the CPU 2 ends the data finishing processing.

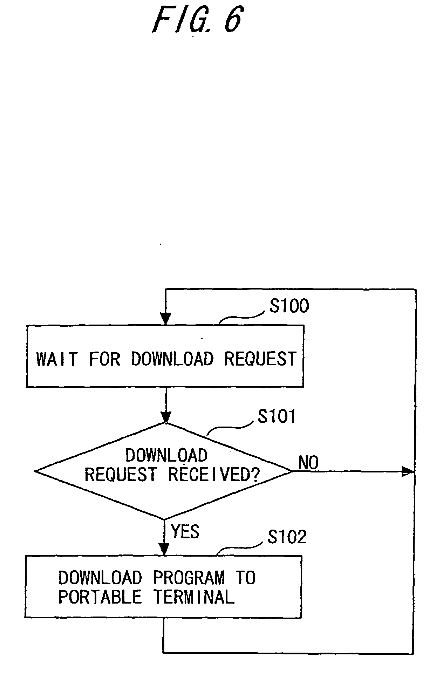

Downloading processing of the application server 11 is shown in FIG. 6. The application server 11 ordinarily waits on a download request from the portable terminal 1 (S100).

When the application server 11 receives a download request (case of YES in S101), the application server 11 downloads the requested application program to the portable terminal 1 that has made the request (S102).

When the program is downloaded, as shown in FIG. 3, a control portion representing the next-executable program is added. Thereafter, the application server 11 returns control to S100.

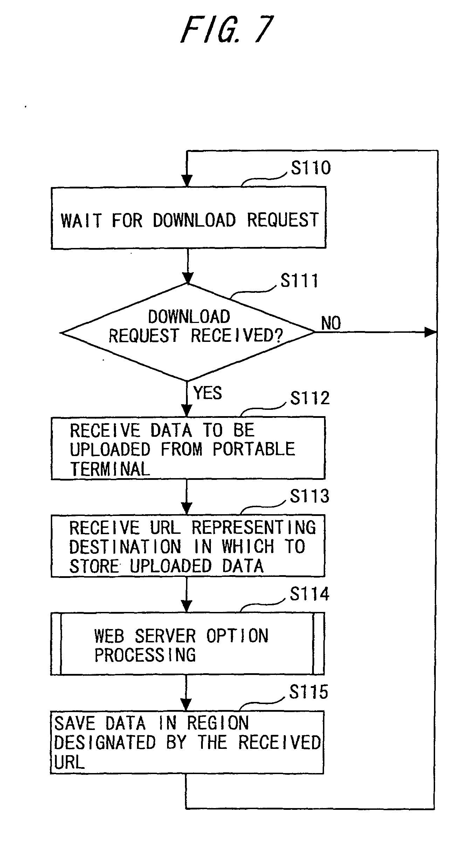

Uploading processing executed by the web server 12 is shown in FIG. 7. In this processing, the web server 11 ordinarily waits on an upload request from the portable terminal 1 (S110).

When the web server 12 receives an upload request (case of YES in S111), the web server 12 receives the data uploaded from the portable terminal (S112). Moreover, the web server 12 receives a URL representing the storage destination in which the uploaded data is stored (S113).

Next, the web server 12 executes web server option processing (S114). The web server option processing is selective processing with respect to the uploaded data, and the presence of processing and the type of processing are designated by the upload request from the portable terminal 1.

Next, the web server 12 stores the data in a region designated by the received URL, such as the file that the URL represents. In this case, in a case where there is no file, a new file is created and the data is stored therein. Thereafter, the web server 12 returns control to S110.

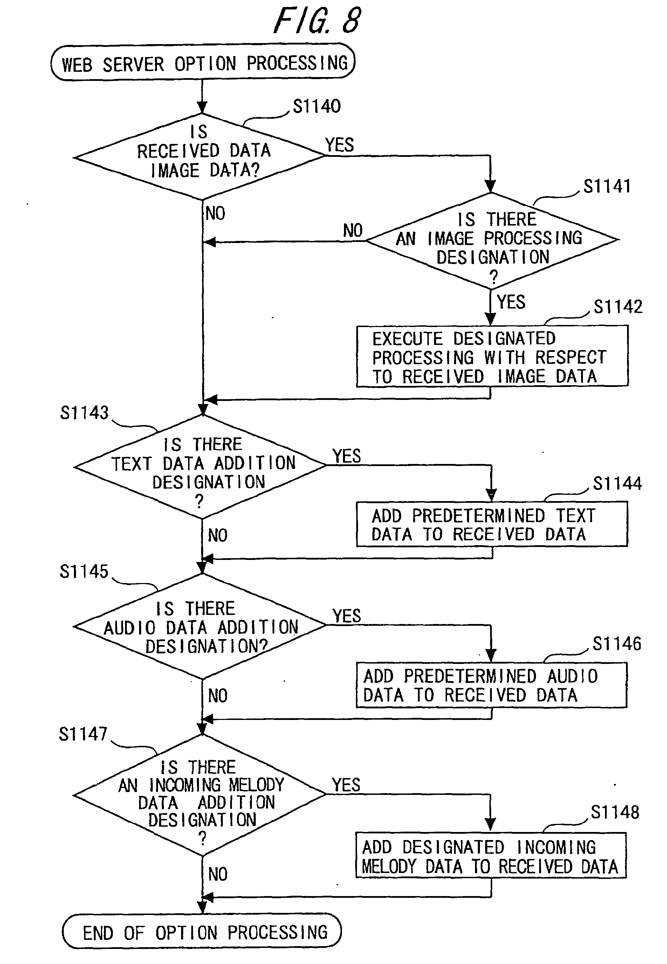

The details of the web server option processing (S114 of FIG. 7) are shown in FIG. 8. In this processing, the web server 12 first determines whether or not the received data is image data (S1140).

In a case where the received data is image data, the web server 12 determines whether or not there is an image finishing designation in the upload request from the portable terminal 1. In a case where this is an image finishing designation, the web server 12 implements the designated finishing with respect to the received image.

The image finishing is adjustment of color and contrast, smoothing of the image, cutting out and synthesis.

Next, the web server 12 determines whether or not there is a text data addition designation in the upload request from the portable terminal 1 (S1143). In a case where there is a text data addition designation, the web server 12 implements addition of the text data to the received data (S1144).

The addition of text data means processing that adds predetermined set text to the uploaded data. For example, this is processing that adds titles and various messages (such as celebratory messages) to the image.

Next, the web server 12 determines whether or not there is an audio data addition designation in the upload request from the portable terminal 1 (S1145). In a case where there is an audio data addition designation, the web server 12 implements the addition of audio data to the received data (S1146).

The addition of audio data means processing that adds predetermined voice messages, music or effects to the uploaded data. For example, this is processing that adds music such as celebratory music (Christmas songs, Happy Birthday to You, etc.) to the image.

The audio data may be recorded in, for example, Wav format, PCM (Pulse Code Modulation) format, ADPCM (Adaptive Differential Pulse Code Modulation) format, or AIFF (Audio Interchange File Format).

Next, the web server 12 determines whether or not there is an incoming melody data addition designation in the upload request from the portable terminal 1 (S1147). In a case where there is an incoming melody data addition designation, the web server 12 implements the addition of incoming melody data to the received data (S1148).

The incoming melody data is data that causes a terminal that has received the data, to which the incoming melody data has been added, to produce the incoming melody. For example, if an incoming melody is added to an image and that image is sent to another terminal, the terminal receiving that image data outputs the incoming melody. Thereafter, the web server 12 ends the web server option processing.

### [E-mail Transmission Processing]

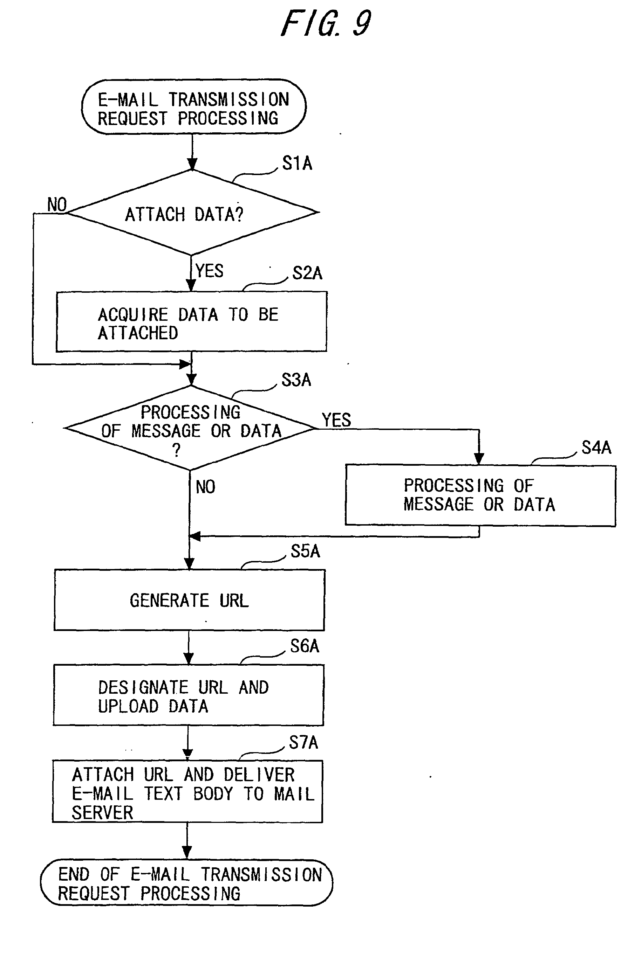

E-mail transmission request processing where the portable terminal 1 requests transmission from the e-mail server 14 is shown in FIG. 9. Similar to the data uploading processing of FIG. 4, this processing is also executed in the CPU 2 of the portable terminal 1.

In the e-mail transmission request processing, the CPU 2 first determines whether or not to attach data such as an image to the e-mail (S1A). In a case where data is to be attached, the CPU 2 acquires the data to be attached in accordance with the user operation (S2). For example, the CPU 2 uses the shooting unit 5 to generate image data. The CPU 2 also imports the content of the attachment file in accordance with the user operation.

Next, the CPU 2 detects the user operation and determines whether or not to finish the body of the message to be sent or the attachment data (S3A). In a case where the body of the message or the attachment data is to be finished, the CPU 2 executes message or data finishing processing (S4A).

By message finishing is meant processing that adds an incoming melody, a set text or predetermined audio data to the message body. Also, as described above, the image finishing is adjustment of color and contrast, smoothing of the image, division, synthesis, the addition of predetermined character data and the addition of audio data.

Next, the CPU 2 generates a URL (S5A). This processing is the same as S5 of FIG. 4. Then, the CPU 2 designates this URL and uploads data to the web server 12 (S6A).

Next, the CPU 2 adds this URL to the message body of the e-mail and delivers it to the transmitted-mail server 14 (S7A).

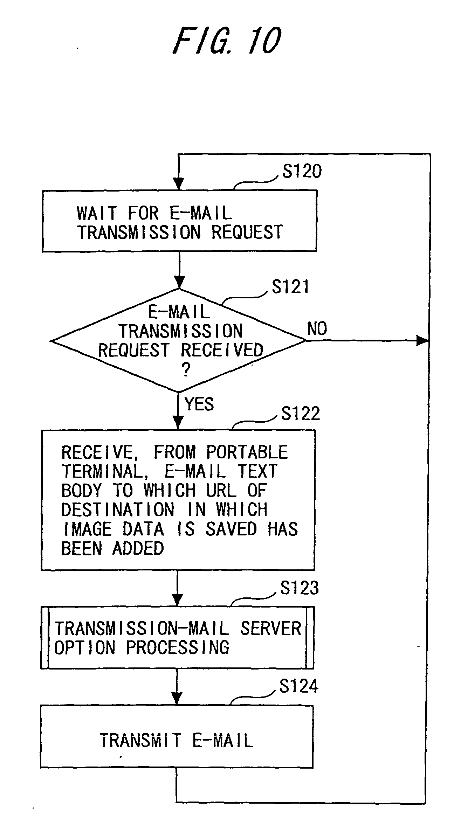

Transmission processing of the transmitted-mail server 14 is shown in FIG. 10. In this processing, the transmitted-mail server 14 is ordinarily in a state where it waits on an e-mail transmission request (S120).

When the transmitted-mail server 14 receives an e-mail transmission request, the transmitted-mail server 14 receives, from the portable terminal 1, the email body to which the URL representing the destination to which the image data is to be saved is added (S122).

Next, the transmitted-mail server 14 executes transmitted-mail server option processing (S123). This transmitted-mail server option processing is selective processing with respect to the data sent by e-mail, and the presence of processing and the type of processing is designated by the e-mail transmission request from the portable terminal 1. Then, the transmitted-mail server 14 sends the e-mail (S124).

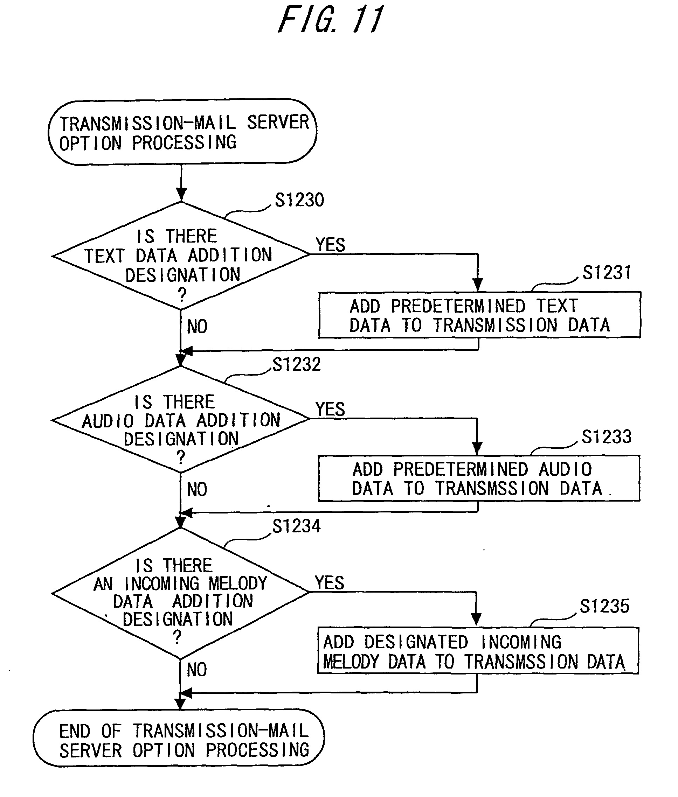

The details of the transmitted-mail server option processing (S123 of FIG. 10) are shown in FIG. 11. In this processing, the transmitted-mail server 14 determines whether or not there is a text data addition designation in the e-mail transmission request from the portable terminal 1 (S1230).

In a case where there is a text data addition designation, the transmitted-mail server 14 adds text data to the transmitted data (S1231). The addition of text data is the same as the processing (S1144) described in the web server option processing of FIG. 8.

Next, the transmitted-mail server 14 determines whether or not there is an audio data addition designation in the e-mail transmission request from the portable terminal 1 (S1232). In a case where there is an audio data addition designation, the transmitted-mail server 14 adds audio data to the transmitted data (S1233). The addition of audio data is the same as the processing (S1146) described in the web server option processing of FIG. 8.

Next, the transmitted-mail server 14 determines whether or not there is an incoming melody addition designation in the e-mail transmission request from the portable terminal 1 (S1234). In a case where there is an incoming melody addition designation, the transmitted-mail server 14 adds an incoming melody to the transmitted data (S1235).

The addition of the incoming melody is the same as the processing (S1148) described in the web server option processing of FIG. 8. Thereafter, the web server 12 ends the transmitted-mail server option processing.

### <Effects of the Present Embodiment>

As described above, in the information system of the present embodiment, the portable terminal 1 successively downloads, from the application server 11, plural application programs for finishing data such as image data and consecutively executes those programs (FIG. 5). For this reason, finishing processing whose load is relatively large can be executed even in the portable terminal 1 whose resources are limited.

Also, because the portable terminal 1 is disposed with the shooting unit 5, such finishing can be successively executed with respect to shot image data. Also, the portable terminal 1 can upload finished data to the web server 12. Also, the portable terminal can add the URL of the finished data to an e-mail and send it to a transmission destination.

Also, the portable terminal 1 of the above-described embodiment generates the URL representing the storage destination of the data uploaded to the web server 12 by a combination of the portable terminal ID, phone number and current year, month, day and time. For this reason, a unique URL that does not overlap with a URL that another terminal has generated can be generated by the portable terminal 1.

### <Changing the URL Generation Sequence>

In the above-described embodiment, the portable terminal 1 generated the URL representing the storage destination of the data to be uploaded. However, the embodiment of the invention is not limited to this sequence.

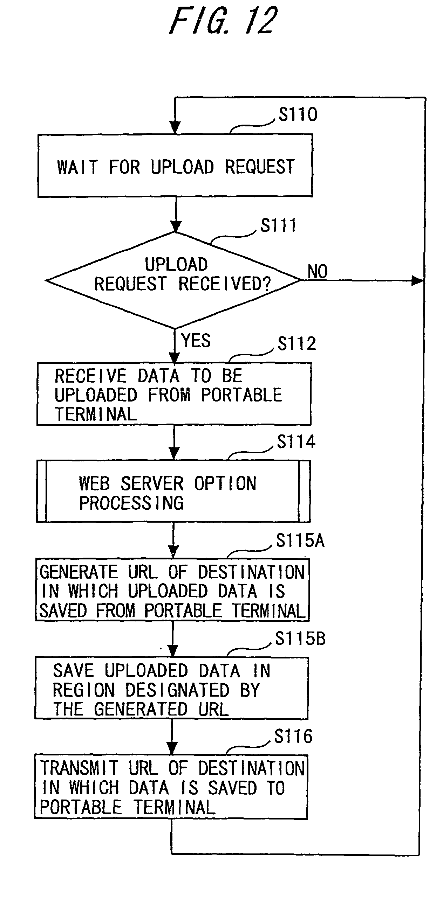

Processing where the web server 12 generates a URL of a destination to which the uploaded data is to be saved is shown in FIG. 12. In this processing, because the processing of S110 to S112 and S114 is the same as the case of FIG. 7, description thereof will be omitted.

After web server option execution, the web server 12 generates a URL of a destination to which the uploaded data is to be saved from the portable terminal (S115A). Similar to the processing (S5 of FIG. 4) in the portable terminal 1, the URL instructing this destination may use the portable terminal ID of the portable terminal 1 requesting uploading and the current year, month, day and time. Also, a random number or serial number may be used. Also, a combination of these may be used.

Next, the web server 12 saves the uploaded data to a region designated by the generated URL (S115B). Next, the web server 12 transmits the URL of the destination to which the data is saved to the portable terminal 1 (S116). Thus, the portable terminal 1 can know the destination to which the uploaded data is saved.

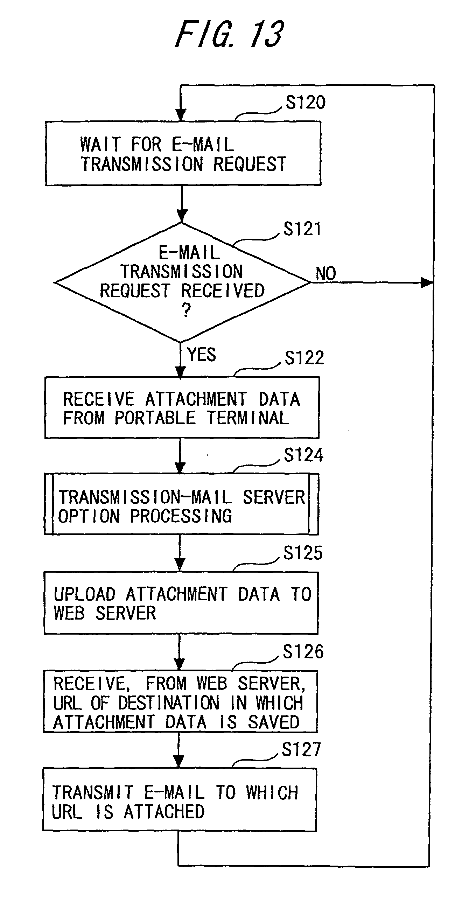

Processing where the transmitted-mail server 12 receives data attached to an e-mail (referred to below as attachment data) from the portable terminal 1 and saves the attachment data to the region of the URL created in the web server 12 is shown in FIG. 13. S120 and S121 of this processing are the same as the case of FIG. 10.

When the transmitted-mail server 14 receives an e-mail transmission request, the transmitted-mail server 14 receives the attachment data from the portable terminal 1 (S122). Next, the transmitted-mail server 14 executes transmitted-mail server options (S124).

Next, the transmitted-mail server 14 uploads the attachment data to the web server 12 (S125). Then, the transmitted-mail server 14 receives, from the web server 12, the URL of the destination to which the attachment data is saved (S126). Then, the transmitted-mail server 14 transmits an e-mail to which is attached the URL of the destination to which the attachment data is saved.

### <System Including Data Server>

In the above-described embodiment, the data to be finished was retained in the portable terminal 1. However, implementation of the invention is not limited to this configuration and sequence. For example, a data server may be added to the information system so that the data is retained in the data server.

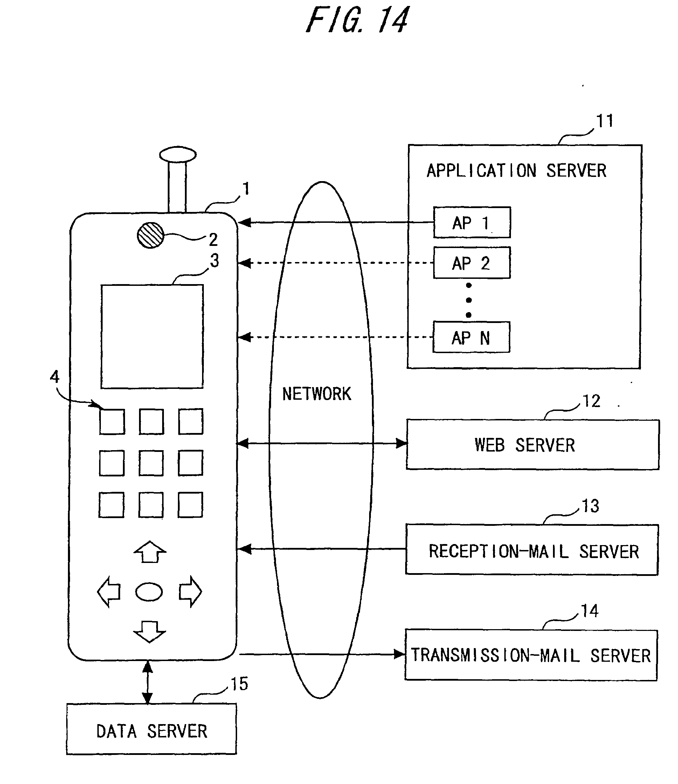

FIG. 14 shows the system configuration of this information system. The configuration of this system is the same as that of FIG. 1, except that a data server 15 has been added.

The data server 15 retains image data that the portable terminal 1 has shot, data to be finished by the portable terminal 1, data to be uploaded from the portable terminal 1 to the web server 12, and data to be added to an e-mail transmitted from the portable terminal 1.

In this information system, the portable terminal 1 first downloads finishing target data from the data server 15 prior to data finishing. Then, similar to the case of the first embodiment, downloading and execution of application programs from the application server 11 are repeated to finish the data.

Similar to the case of the first embodiment, the finished data may be uploaded to the web server 12. Also, the URL of the destination to which the uploaded data is saved may be added to an e-mail.

However, the invention may also be configured so that the finished data is saved in the data server 15 and described in the webpage where the URL representing the saved destination thereof is delivered to the web server 12. Also, the invention may be configured so that the finished data is retained in the data server 15 and the URL representing the saved destination thereof is added to an e-mail and transmitted.

Moreover, the invention may be configured so that the data is divided into partial data and successively delivered to the portable terminal 1 without the data being downloaded all at once from the data server 15 to the portable terminal 1. The divided data may then be successively finished.

However, in a case where image data is to be finished, it is difficult to properly process boundary portions dividing the image, and it is not simple to divide and process data in processing such as color adjustment of images, contrast adjustment, adjustment of brightness, smoothing and contour emphasis.

On the other hand, processing that synthesizes an image and an image, processing that cuts out an image, and processing that adds character data or audio data to an image are properly executed even with respect to divided data.

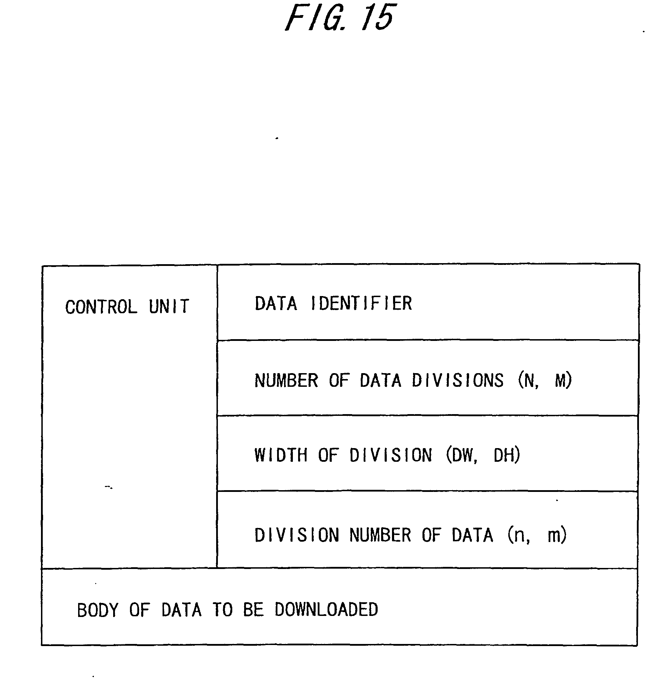

FIG. 15 shows a data configuration diagram of data that is divided and downloaded from the data server 15 to the portable terminal 1. This data is configured from a control portion and the body of data to be downloaded. Here, the body of the data to be downloaded is the divided data itself. In the present embodiment, a two-dimensional rectangular display region is supposed in a case where the data is image data. A display region is not particularly supposed in cases other than when the data is image data.

The control portion includes a data identifier, the number of data divisions (N, M), a division width (ΔW, ΔH), and a main data division number (n, m). The data identifier is a character string that identifies the processing target data.

The number of data divisions (N, M) is the horizontal division N and the number of vertical divisions (M) in a case where data is divided. However, this is fixed so that M = 1 in cases other than when the data is image data.

The division width (ΔW, ΔH) is the horizontal width ΔW and the vertical width ΔH of divisional regions with respect to image data.

The main data division number (n, m) is a position number representing the positions of divided regions. For example, upper right region is defined as a starting position (1, 1), n is defined as the position number in the right direction and m is defined as the position number in the lower direction. However, this is set so that m = 1 in cases other than when the data is image data, and the order of the divided data is designated by the number n.

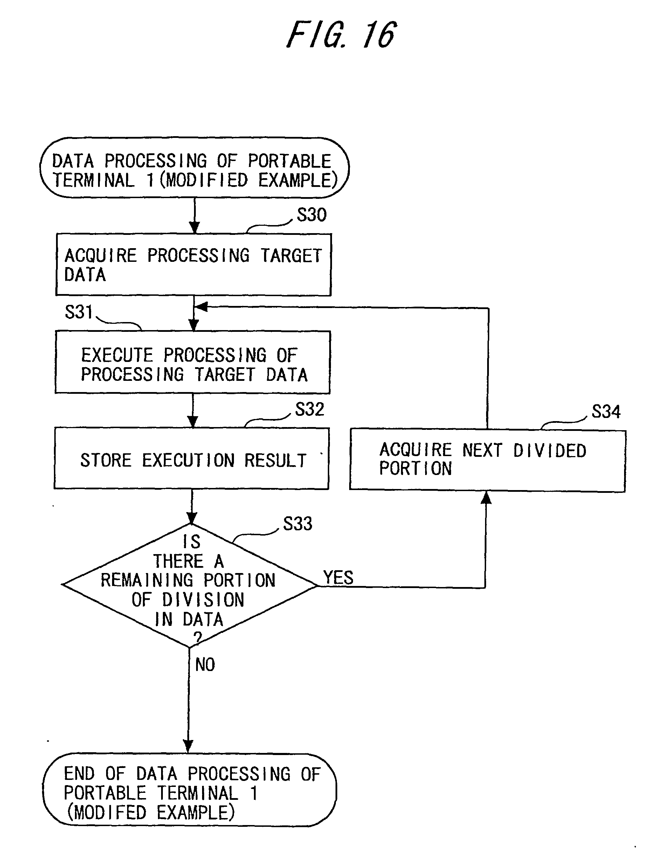

FIG. 16 shows the sequence of data processing of the CPU 2 in the portable terminal 1 that finishes the divided data. In this processing, the CPU 2 first acquires the processing target data (divided data) from the data server 15 (S30).

Next, the CPU 2 executes predetermined processing with respect to the processing target data (S31). The predetermined processing is, for example, the addition of character data with respect to the image, image division and image synthesis.

Next, the CPU 2 retains the data of the execution result in the data server 15 (S32). In this case, the data server 15 may synthesize data from the second portion of the divided portions on with the portion processed prior thereto.

Next, the portable terminal 1 determines whether or not there is a remaining portion of division in the data. Then, in a case where there is a remaining portion of division, the CPU 2 acquires the next divided portion from the data server 15 (S34). Then, the CPU 2 returns control to S31. In a case where there is no remaining portion of division, the CPU 2 ends data processing.

By adopting this sequence, all of the data can eventually be finished even in a case where the portable terminal 1 does not have sufficient resources for retaining the data.

### <Other Modified Examples>

In the above-described embodiment, in a case where an image is to be attached to an e-mail, the image was first uploaded to the web server 12 and the URL representing the destination to which the uploaded data is saved was attached to the body of the e-mail. However, implementation of the invention is not limited to this sequence. For example, the image data itself may also be attached to the e-mail.

In the above-described embodiment, the application server 11 downloaded requested application programs to the portable terminal 1 in response to a request from the portable terminal 1. Then, the portable terminal 1 executed the application programs. However, implementation of the invention is not limited to this configuration and action. For example, the invention may also be configured so that, when there is a request from the portable terminal 1, the application programs are executed in the application server 11.

In this case, the invention may be configured so that the processing target data is delivered from the portable terminal 1 to the application server 11. Also, as shown in FIG. 14, in a case where the processing target data is retained in the data server 15, the invention may be configured so that the location of the processing target data is delivered from the portable terminal 1 to the application server 11.

### (Second Embodiment)

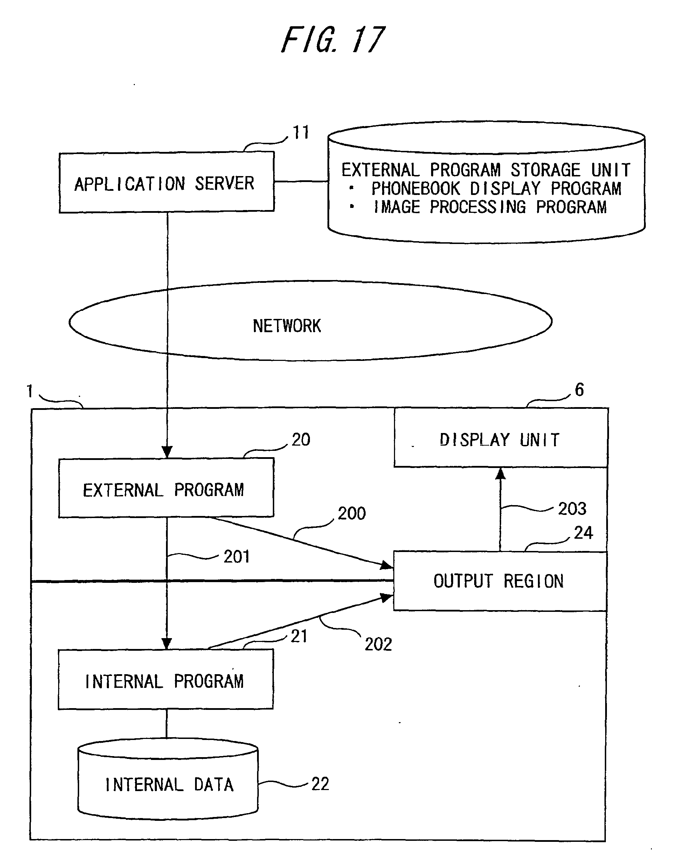

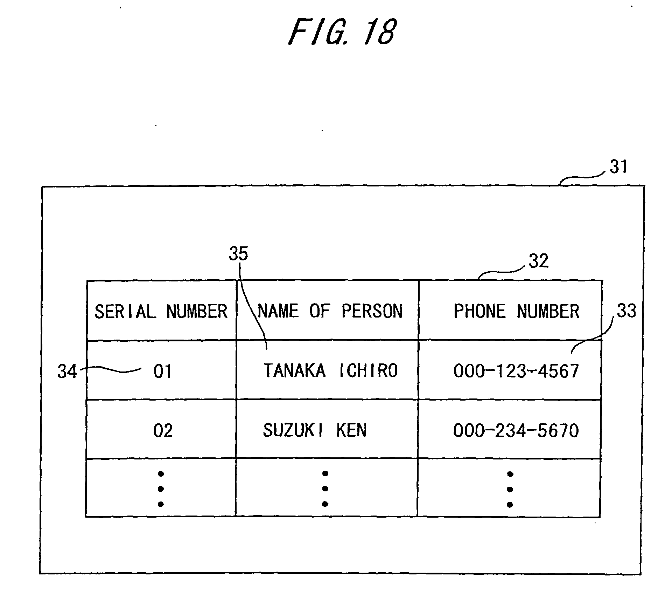

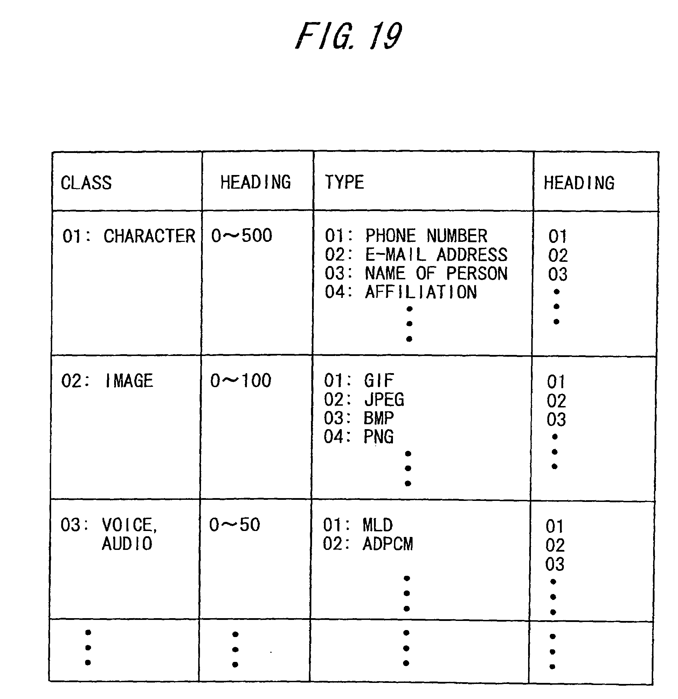

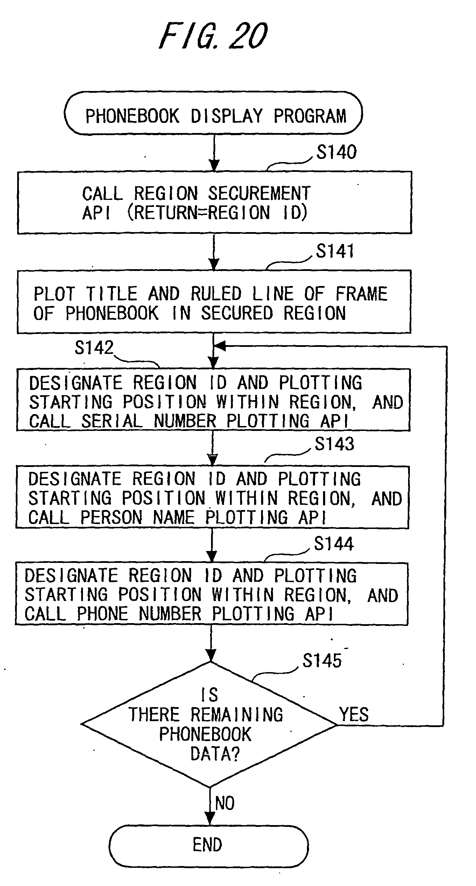

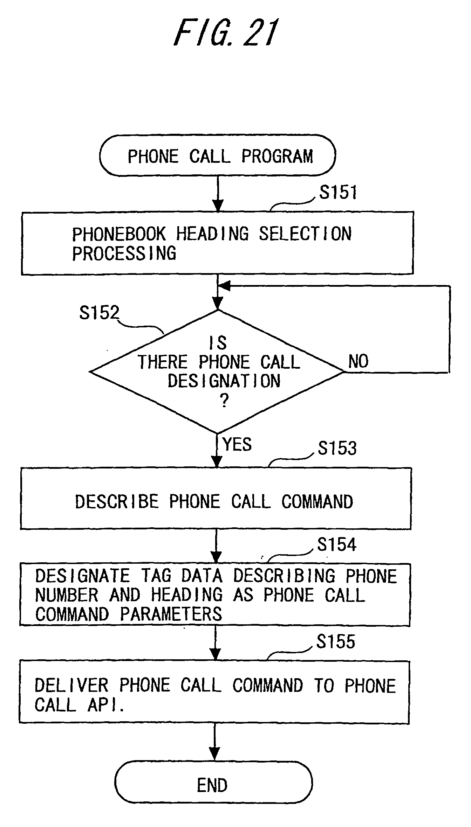

A second embodiment of the invention will be described on the basis of FIG. 17 to FIG. 21. FIG. 17 is a system configuration diagram of an information system pertaining to the second embodiment, FIG. 18 is an example of a phonebook screen that a phonebook display program shown in FIG. 17 displays on the portable terminal 1, FIG. 19 is an example of_tag information describing an interface between an external program 20 and an internal program 21 shown in FIG. 17, FIG. 20 is a flow chart showing processing of the phonebook display program, and FIG. 21 is a flow chart showing processing of a phone call program executed by the portable terminal 1.

In the first embodiment, description was given in regard to a system that realized complex processing in the portable terminal 1, whose resources are few, by successively downloading programs from the application server 11 to the portable terminal 1 and executing those programs.

In the present embodiment, description will be given in regard to a system that ensures the security of the user in a case where programs are downloaded from the application server 11 to the portable terminal 1 and used.

Other constituent elements are the same as those in the case of the first embodiment. Thus, with respect to the same constituent elements, the same reference numerals will be given thereto and description thereof will be omitted. Also, reference will be made to FIGS. 1 to 16 as needed.

### <Background of the Invention>

Conventionally, downloading of programs from the application server 11 to the portable terminal and execution of those programs have been conducted. However, conventionally, the relationship between an application program downloaded from the application server (referred to below as an external program in the present embodiment) and an internal program stored in the portable terminal 1 has been as follows.
(1) The user starts the external program and executes predetermined processing such as search and display of phone numbers.
(2) The external program makes a request to the internal program and causes the internal program to search phone numbers that match designated search conditions.
(3) An internal program such as a database management program executes search processing and delivers the result to the external program.
(4) The external program displays the delivered result.

In this processing sequence, there has been the potential for the searched result to circulate on the network via the external program and the network.

### <System Configuration>

FIG. 17 shows a conceptual diagram of the information system pertaining to the present embodiment. This information system is configured by servers such as the application server 1, which provides an external program 20 to the portable terminal 1, being connected by a network.

The application server 11 includes an external program storage portion and retains various external programs. For example, a phonebook display program and an image finishing program are included in the external programs. There are many cases where these external programs 20 are described in a language such as Java.

The portable terminal 1 includes an external program 20 and an internal program 21 in a memory 3 (see FIG. 2). The CPU 2 of the portable terminal 1 executes the external program 20 and provides functions corresponding to the user.

In the present embodiment, the external program 20 outputs a unique processing result of the external program 20 to an output region 24 (arrow 200). Also, processing that the external program 20 is to execute via the internal program 21 is commanded of the internal program 21 via a predetermined application interface (arrow 201).

In this application interface, processing target data is indirectly designated in the case of internal data 22 that the internal program 21 manages. That is, information specifying the internal data 22 is not directly designated; rather, the internal data 22 is indirectly designated by a number of a heading in the type thereof. For example, a command that outputs first to tenth headings of data of the phonebook type is delivered to the internal program 21 from the external program 20.

The internal program 21 accesses the internal data 22 and outputs, to the output region 24 and as image data, data of a designated heading within the data of the designated type (arrow 202). The content of the storage region 24 is displayed as is on the display unit 6. Thus, phone numbers recorded in the first to tenth places of the phonebook are displayed on the display unit 6.

In this case, the external program 24 cannot simply recognize the image of the output region as a character string. Thus, generation of fraud such as the external program delivering the internal program 22 to a third party via the network can be reduced.

A case where the image is treated as internal data will be considered. That is, in a case where one piece of data is selected from plural image data that has been shot with the shooting unit 5 and stored inside the portable terminal 1, it will be assumed that
Type tag: shot image data (JPEG)
Heading tag: second image data
Handling tag: Finishable data (copyright-free) will be handled as the tag attached to the data.

An image finishing application is downloaded from an application group in the application server 11 of the network. The image finishing application first accesses the internal data having a shot image data tag as target image data to be handled from the internal data 22 of the portable terminal 1.

The internal data 22 having this tag is searched and listed. The title name attached to the shot image data in this case acquires the title name list retained in a portable phone using the type tag and heading tag.

In this case, the application interface for the acquisition and the application interface for the display are realized by the internal program 21 of the portable terminal 1. Thus, it is not necessary for the external application 20 (in this case, the image finishing application) to directly handle the title name. As a result, protection of specific privacy information such as the title of the image becomes possible.

It will be understood that the data selected from the list is the shot image data (JPEG) from the type tag. As a result, processing with the image finishing application can realize individual processing assuming that it handles JPEG data.

For example, in a case where image data of coordinates (X, Y) in the image is handled, a data access application interface of the portable terminal 1 is used so that a value can be obtained using an offset address value computed from the coordinates. Also, the finished data can be written using the same application interface. By using this method, processing can be conducted without confirming the content of all of the image data.

In a case where processing by the image finishing application has ended, the finished image data may be returned to the original area inside the portable terminal, or may be uploaded and saved to a usable space as the data server 15 (see FIG. 1) of the network.

### <Screen Configuration of Phonebook Display Program>

FIG. 18 shows an example of a screen display of the phonebook display program shown in FIG. 17. In this example, a ruled line 32 is drawn in a display region 31 and a table is formed. The first line of this table is a title line, and the various titles of "serial number", "name of person" and "phone number" are displayed.

Also, per-individual data of the phonebook is displayed in the lines from the second line on of this table. In each line, a serial number 34, a person's name 35 and a phone number 33 are displayed in correspondence to the title line.

### <Example of Configuration of Tag Information>

FIG. 19 shows an example of the configuration of the tag information used in the present embodiment. As shown in FIG. 19, in the present embodiment, the tag information is designated by a combination of a class tag, a type tag and a heading tag.

The class tag designates the type of the tag. For example, in the case of "class tag = 01", this represents that the data is character data. Also, in the case of "class tag = 02", this represents that the data is image data. Moreover, in the case of "class tag = 03", this represents that the data is voice or audio data.

The type tag is defined for each class. For example, the type tag is designated by a range of heading numbers of 0 to 500 with respect to character data. Additionally, "class tag = 01" with respect to character data represents a phone number. Also, "class tag = 02" with respect to character data represents an e-mail address. "Class tag = 03" with respect to character data represents a person's name. Also, "class tag = 04" with respect to character data represents affiliation.

Moreover, a heading tag can be designated with respect to each type tag. For example, the fifth piece of data of the phonebook is designated by "class tag = 01", "type tag = 01" and "heading tag = 5".

Similarly, image data is designated by "class = 02". Also, voice and audio data is designated by "class = 03".

### <Action>

FIG. 20 shows processing of the phonebook display program executed by the CPU 2 of the portable terminal 1. When the CPU 2 detects a phonebook display instruction via the operation unit 4 by the user, the CPU 2 starts the phonebook display program shown in FIG. 20.

In this processing, the phonebook display program first calls a plotting partitioning application interface (S140). Due to this calling, a region corresponding to a plotting region of a dimension designated in the memory 3 is ensured. In this case, a region ID is returned to the phonebook display program as a return from the application interface. This region ID is known as a window ID in a multi-window system or a part ID inside a window. By writing the image data to this region, the content thereof is displayed as is on the display unit 3.

Next, the phonebook display program plots a title and ruled line that become the frame of the phonebook in the ensured region (S141).

Next, the phonebook display program designates a plot starting position inside the region and calls a serial number plotting application interface (API) (S142). In so doing, the second (serial number 01) serial number of the phonebook is displayed.

Next, the phonebook display program designates the aforementioned region ID and plot starting position inside the region and calls a person name plotting application interface (S143). In this case, character data of "class tag = 01", person name of "type tag = 03" and "heading = 1" are designated as the tag information. As a result, the second (serial number 01) person name of the phonebook is displayed.

Next, the phonebook display program designates the aforementioned region ID and plot starting position inside the region and calls a phone number plotting application interface (S144). In this case, character data of "class tag = 01", phone number of "type tag = 01" and "heading = 1" are designated as the tag information. As a result, the second (serial number 01) phone number of the phonebook is displayed.

Next, the phonebook display program determines the number of remaining data of the phonebook. The remaining data number of the phonebook is determined by the return from the application interface. Then, in a case where there is remaining data in the phonebook, the phonebook display program returns control to S142. In a case where there is no remaining data in the phonebook, the phonebook display program ends processing.

FIG. 21 shows processing of the phone call program. This program is executed when, for example, the user selects a specific line of the phonebook and does a phone call operation.

That is, the phone call program waits for the user to select a heading of the phonebook (S151). Then, when there is a phone call instruction after a heading has been selected (case of YES in S152), the phone call program describes a phone call command in a predetermined region of the memory 3 (S153).

Next, the phone call program sets character data of "class = 01", a phone number of "type = 01" and "heading = number of selected heading" as the parameters of the phone call command (S514).

Next, the phone call program delivers the parameters resulting from the phone call command to the phone call application interface (S155). Due to this calling, the phone number of the heading of the phonebook that the user has selected is called.

### <Effects of the Embodiment>

In this manner, in the portable terminal 1 of the present embodiment, processing target the internal data 22 is designated by the tag information designating the class, type and heading number of the data between the external program 20 downloaded from the application server 11 and the internal program 21.

For this reason, the external program does not directly touch the content of the internal data 22. For this reason, the danger of the internal data 22 circulating can be reduced even in a case where an external program 20 whose internal specification disclosed on the network is unclear is used.

As described above, in a case where the class, type and heading of the data are indirectly designated by the tag and phone calling has been executed, the tag information is recorded and the called phone number is not recorded in the operation history. Thus, even if phone number display or phone calling is executed, the danger of the privacy of the user, such as who the user called and when, circulating can be reduced.

### <Modified Examples>

In the above-described embodiment, the class tag, the type tag and the heading tag were used as an example of the tag information. However, implementation of the invention is not limited this configuration. For example, the invention may also be configured so that the internal data 22 is designated by the two types of the type tag and the heading tag. Also, information may be specified by using four or more tags.

In the above-described embodiment, an example was described where the display heading of the phonebook was selected and a phone call was placed. However, implementation of the invention is not limited to this application. For example, the invention can also be applied to an application where a specific address is selected from a list of e-mail addresses and an e-mail is transmitted to that address.

Also, the functions of the portable terminal 1 of the first embodiment may be combined with the functions of the portable terminal 1 of the second embodiment. For example, as shown in FIG. 4, in the data uploading processing of the portable terminal 1, data to be finished was acquired (S1, S2), a program downloaded from the application server 11 was executed and the data was finished (S4).

In this data finishing processing, the processing target data may be specified by the aforementioned tag information.

That is, according to the description of FIG. 19, the image data may be specified as in the image of "class = 02", the JPEG of "type = 02" and "heading = 01".

In a program that executes image finishing in this manner (corresponding to the external program 21 of the second embodiment) , the data is specified by indirect tag information, whereby the application called "what kind of image data did the user process at the time of execution of the external program?" is protected. For example, even in a case where the program executing image finishing of the first embodiment records a log, the tag information is recorded as the log and the actual name of the image data does not circulate to the outside.

### (Computer-readable Recording Medium)

A program that realizes any of the above-described functions in a computer can be recorded in a computer-readable recording medium. These functions can be provided by causing the computer to read and execute the program of the recording medium.

Here, by computer-readable computer medium is meant a recording medium that can accumulate information such as data and programs by electrical, magnetic, optical, mechanical or chemical action and which can be read by a computer. Example of such recording media that can be removed from a computer include floppy disks, magneto-optical disks, CD-ROMs, CD-R/Ws, DVDs, DATs, 8 mm tape and memory cards.

Also, examples of recording media fixed in computers include hard disks and ROMs (Read Only Memories).

### (Data Communication Signal Realized in a Carrier Wave)

Also, the above-described program can be stored in a hard disk or memory of a computer and distributed to other computers via a communication medium. In this case, the program is transmitted through the communication medium as a data communication signal realized by a carrier wave. Additionally, the above-described functions can be provided on a computer to which the program has been distributed.

Here, the communication medium may be any of a wired communication medium, such as a metal cable including coaxial cables and twist pair cables or an optical communication cable, and a wireless communication medium, such as satellite communication or terrestrial wireless communication.

Also, the carrier wave is an electromagnetic wave or light for modulating the data communication signal. However, the carrier wave may also be a direct current signal. In this case, the data communication signal has a baseband waveform without a carrier wave. Thus, the data communication signal realized in a carrier wave may be any of a modulated broadband signal or an unmodulated baseband signal (corresponding to a case where a direct current signal with a voltage of 0 is used as the carrier wave).

### INDUSTRIAL APPLICABILITY

The present invention can be used in industries that manufacture portable terminals such as portable phones, communications industries resulting from portable terminals, service industries using portable terminals, industries manufacturing servers on networks, and information industries that use servers to provide information and services.

## Claims

1. A terminal apparatus comprising:
a communication unit that communicates with a server apparatus;
a processing unit that executes a program received from the server apparatus via the communication unit; and
a control unit that controls the communication unit and the processing unit, wherein
when the processing unit completes execution of a first program, the control unit acquires a destination in which to store the result of that execution, receives, from the server apparatus via the communication unit, a second program that further processes the execution result, and then causes the processing unit to execute the second program.

2. The terminal apparatus of claim 1, wherein the terminal apparatus is carried by a user.

3. The terminal apparatus of claim 1, further comprising a shooting unit that shoots images and an image storage unit that stores the shot images.

4. The terminal apparatus of claim 1, further comprising a registration portion that registers data in a web server via the communication unit, wherein the processing unit executes processing with respect to that data.

5. The terminal apparatus of claim 4, further comprising a shooting unit that shoots images, wherein image data shot by the shooting unit is included in the data.

6. The terminal apparatus of claim 5, wherein the format of the image data includes at least one of GIF format, JPEG format and PNG format.

7. The terminal apparatus of claim 4, wherein at least one of text data and incoming melody data that gives notification, by music, of incoming data when data is received in the communication unit is included in the data.

8. The terminal apparatus of claim 4, wherein audio data is further included in the data.

9. The terminal apparatus of claim 8, wherein the format of the audio data includes at least one of Wav format, PCM format, ADPCM format and AIFF format.

10. The terminal apparatus of claim 4, further comprising an instruction information generation unit that generates instruction information representing the location of the data registered in the web server.

11. The terminal apparatus of claim 4, further comprising an e-mail processing unit that creates an e-mail including instruction information representing the location of the data registered in the web server and requests transmission of e-mail from an e-mail server via the communication unit.

12. The terminal apparatus of claim 10 or 11, wherein image data is included in the data and the processing unit executes processing with respect to that image.

13. A server that receives a request to save data from a terminal apparatus, the server comprising:
a communication unit that communicates with the terminal apparatus;
a storage unit that stores data received via the communication unit; and
an instruction information generation unit that generates instruction information representing a destination in which to store the data.

14. The server of claim 13, further comprising a data addition unit that adds, with respect to the data, at least one of text data, audio data and incoming melody data that gives notification, by music, of incoming data when the data is received.

15. The server of claim 13, further comprising a processing unit that executes processing, when the data is image data, with respect to that image data.

16. An e-mail server that receives an e-mail transmission request from a terminal apparatus, the e-mail server comprising:
a transmission request receiving unit that receives a transmission request including an e-mail text body from a terminal apparatus;
a storage request unit which, when data has been attached to the e-mail text body, requests a server on a network to store that data and acquires instruction information representing a destination in which to store the data stored in the server; and
a transmission unit that adds the instruction information to the e-mail text body and transmits an e-mail.

17. A terminal apparatus comprising:
a communication unit that communicates with a server apparatus;
a processing unit that executes a program received from the server apparatus via the communication unit; and
a data management unit that provides data in accordance with a request from the program executed by the processing unit, wherein
the request includes information specifying the data and information designating a destination to which to output the data, and
the management unit retains the data in a first format, converts the data to a second format and outputs the data to the output destination.

18. The terminal apparatus of claim 17, wherein the first data includes character data and the second data includes data where the characters have been converted to an image.

19. The terminal apparatus of claim 17, wherein the information specifying the data includes information identifying the type of data and information identifying a position in plural headings or a rank in plural headings configuring one type of identified information.

20. A terminal apparatus comprising:
a communication unit that communicates with a server apparatus;
a processing unit that executes a program received from the server apparatus via the communication unit;
a function providing unit that provides a predetermined function in accordance with a request from the program executed by the processing unit; and
a data management unit that provides data to the function providing unit, wherein
the request includes information specifying the data and information instruction the function relating to that data,
the program indirectly specifies the data in the request, and
the data management unit delivers the indirectly specified data to the function providing unit or the processing unit.

21. The terminal apparatus of claim 20, wherein the data management unit manages image data and delivers image data indirectly specified by the request to the program executed by the processing unit.

22. An information processing method that is executed by a computer disposed with a communication unit that communicates with a server apparatus, the information processing method comprising the steps of:
receiving a first program from a server apparatus;
executing the first program;
acquiring a destination in which to store the execution result;
receiving, from the server apparatus, a second program that further processes the execution result; and
executing the second program.

23. An information processing method that is executed by a computer disposed with a communication unit that communicates with another computer, the information processing method comprising the steps of:
receiving a data storage request from the other computer;
storing the data received by the request;
generating instruction information representing a destination in which to store the data; and
delivering the instruction information to the other computer.

24. An information processing method that is executed by a computer including a communication unit, the information processing method comprising the steps of:
receiving a transmission request including an e-mail text body;
when data has been attached to the e-mail text body, requesting storage of that data from a server on a network;
acquiring instruction information representing a destination in which to store the data stored in the server; and
adding the instruction information to the e-mail text body and transmitting an e-mail.

25. An information processing method that is executed by a computer disposed with a communication unit that communicates with a server apparatus, the information processing method comprising the steps of:
executing a program received from the server apparatus; and
providing data in accordance with a request from the program, the request including information specifying the data and information designating a destination to which to output the data, wherein
in the providing step, the data stored in a first format is converted to a second format and outputted to the output destination.

26. The information processing method of claim 25, wherein the first data includes character data and the second data includes data where the characters have been converted to an image.

27. The information processing method of claim 25, wherein the information specifying the data includes information identifying the type of data and information identifying a position in plural headings or a rank in plural headings configuring one type of identified information.

28. An information processing method that is executed by a computer disposed with a communication unit that communicates with a server apparatus, the information processing method comprising the steps of:
executing a program received from the server apparatus;
providing a specific function in accordance with a request from the program; and
referencing data necessary for the provision of the function, wherein
the request includes information specifying the data and information designating the function relating to that data,
the program indirectly specifies the data in the request, and
the body of the indirectly specified data is referenced in the referencing step.

29. Aprogram that is executed in a computer disposed with a communication unit that communicates with a server apparatus, the program comprising the steps of:
receiving a first program from a server apparatus;
executing the first program;
acquiring a destination in which to store the execution result;
receiving, from the server apparatus, a second program that further processes the execution result; and
executing the second program.

30. A program that is executed in a computer disposed with a communication unit that communicates with another computer, the program comprising the steps of:
receiving a request to store data from the other computer;
storing the data received by the request;
generating instruction information representing a destination in which to store that data; and
delivering the instruction information to the other computer.

31. A program that is executed in a computer including a communication unit, the program comprising the steps of:
receiving a transmission request including an e-mail text body;
when data has been attached to the e-mail text body, requesting storage of that data from a server on a network;
acquiring instruction information representing a destination to which to store the data stored in the server; and
attaching the instruction information to the e-mail text body and transmitting an e-mail.

32. A program that is executed in a computer disposed with a communication unit that communicates with a server apparatus, the program comprising the steps of:
executing a program receiving from the server apparatus; and
providing data in accordance with a request from the program, wherein
the request includes information specifying the data and information designating a destination to which to output the data, and
in the providing step, the data stored in a first format is converted to a second format and provided to the output destination.

33. The program of claim 32, wherein the first data includes character data and the second data includes data where the characters have been converted to an image.

34. The program of claim 32, wherein the information specifying the data includes information identifying the type of data and information identifying a position in plural headings or a rank in plural headings configuring one type of identified information.

35. A program that is executed in a computer disposed with a communication unit that communicates with a server apparatus, the program comprising the steps of:
executing a program received from the server apparatus;
providing a predetermined function in accordance with a request from the program; and
referencing data necessary for the provision of the function, wherein
the request includes information specifying the data and information designating the function relating to that data,
the program indirectly specifies the data in the request, and
the body of the indirectly specified data is referenced in the referencing step.
